# FASCICULE DE BREVET EUROPEEN

(11) **EP 0 395 509 B1**
(45) Date de publication et mention de la délivrance du brevet: **14.09.1994**
(21) Numéro de dépôt: 90401126.9
(22) Date de dépôt: 25.04.1990
(51) Int. Cl.: G21C 3/356

(54) **Grille à ressorts de maintien pour assemblage combustible nucléaire**
Federabstandshaltergitter für Kernreaktorbrennelemente
Supporting spring-grid for nuclear fuel assembly

(30) Priorité: 28.04.1989 FR 8905724
(43) Date de publication de la demande: 31.10.1990
(73) Titulaire: FRAMATOME, 92400 Courbevoie (FR); COGEMA COMPAGNIE GENERALE DES MATIERES NUCLEAIRES, F-78141 Velizy-Villacoublay (FR)
(72) Inventeur: Petit, Bernard, F-69230 Saint Genis Laval (FR)
(74) Mandataire: Fort, Jacques

(56) Documents cités:
- EP-A- 0 025 393
- EP-A- 0 280 595
- DE-A- 2 639 817
- FR-A- 2 366 669

## Description

L'invention concerne les grilles d'entretoisement et de maintien de crayons pour assemblage combustible nucléaire, du type comprenant plusieurs jeux de plaquettes entrecroisées pour définir des cellules de réception de crayons de combustible. De telles grilles sont utilisées pour retenir les crayons aux noeuds d'un réseau à mailles régulières, carrées ou triangulaires. Pour retenir les grilles sur les crayons en permettant à ces derniers de glisser en cas de dilatation différentielle des crayons entre eux ou par rapport aux tubes-guides sur lesquels sont fixées les grilles, les plaquettes portent des ressorts qui appliquent les crayons contre une bossette fixe de la plaquette opposée à celle qui porte le ressort ou contre un autre ressort. De telles grilles sont notamment utilisées dans les assemblages de réacteurs modérés et refroidis par de l'eau légère.

On connaît déjà de telles grilles utilisant des ressorts doubles rapportés, constitués par une bande repliée en U, ayant deux branches actives situées de part et d'autre d'une plaquette, destinées à s'appuyer sur les crayons occupant deux cellules mutuellement adjacentes et séparées par la plaquette, raccordées par une boucle surmontant la plaquette et solidarisées l'une de l'autre par soudage à la base de la boucle. En particulier, on utilise largement à l'heure actuelle des grilles comportant des ressorts doubles dont les branches sont solidarisées l'une de l'autre par soudage à travers deux fenêtres ménagées dans la plaquette correspondante et situées de part et d'autre d'une partie médiane élastique des branches. On peut notamment trouver une description de tels ressorts dans le document EP-A- 0 280 595.

Ce type de grille donne en général de bons résultats. Cependant, on peut craindre les conséquences d'une rupture de la soudure reliant les extrémités des branches éloignées de la boucle, de résistance limitée du fait de la faible surface disponible pour le soudage. Une telle rupture peut permettre à l'extrémité libre des branches, ainsi désolidarisées, de venir en contact avec la gaine des crayons et de les détériorer.

L'invention vise notamment à fournir une grille pour assemblage de combustible nucléaire répondant mieux que celles antérieurement connues aux exigences de la pratique, notamment en ce qu'elle écarte ou du moins réduit les risques liés à la rupture d'une soudure.

Dans ce but, l'invention propose notamment une grille du type ci-dessus défini, dans laquelle les branches de chaque ressort sont reliées entre elles d'une part par une soudure à la base de la boucle, d'autre part par des moyens de verrouillage mécanique des branches l'une par rapport à l'autre et par rapport à la plaquette correspondante, ces moyens étant situés à l'opposé de la soudure par rapport à la partie élastique de la branche correspondante et comprenant les extrémités de chaque branche qui ont une largeur réduite à la moitié de la largeur de la partie courante et constituant des languettes qui traversent une fenêtre pratiquée dans la plaquette correspondante en s'entrecroisant et s'appuient sur la plaquette au-delà de la fenêtre.

Dans un autre mode de réalisation, l'une des branches est plus longue que l'autre et est rabattue à 180° sur l'extrémité de cette dernière, en saillie au-delà de la plaquette. Dans un autre mode de réalisation encore, les extrémités de chaque branche s'engagent sous des pontets respectifs constitués par découpe et enfoncement local de la plaquette, de part et d'autre du plan médian de celle-ci.

L'invention sera mieux comprise à la lecture de la description qui suit de modes particuliers de réalisation, donnés à titre d'exemples non limitatifs. La description se réfère aux dessins qui l'accompagnent, dans lesquels :
- la Figure 1 est une vue en perspective d'un fragment d'une grille d'assemblage combustible, munie de ressorts pouvant être conformes à l'invention ;
- la Figure 2 est une vue en coupe suivant un plan vertical montrant un ressort double (à deux branches actives) conforme à un premier mode de réalisation de l'invention ;
- la Figure 3 est une vue partielle depuis la droite de la Figure 2, montrant les languettes terminales du ressort ;
- les Figures 4 et 5, similaires aux Figures 2 et 3, montrent un autre mode de réalisation ;
- la Figure 6, similaire à la Figure 4, montre une variante ;
- les Figures 7 et 8, similaires aux Figures 2 et 3, montrent encore un autre mode de réalisation ;
- la Figure 9 est une vue en perspective d'une fraction de plaquette comportant des pontets utilisables pour recevoir un ressort du genre montré en Figures 7 et 8.

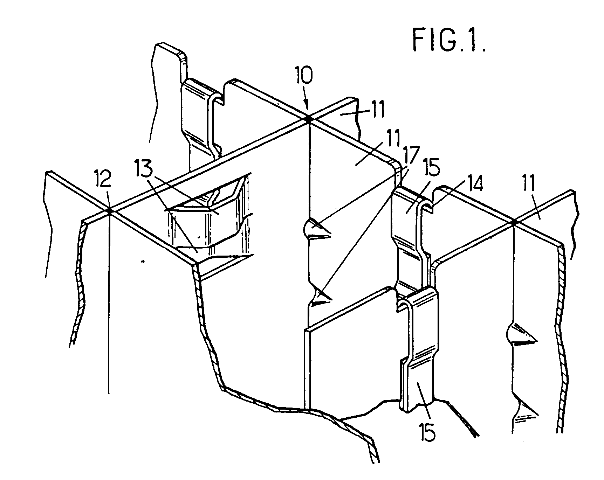

La grille 10 dont une fraction est montrée en Figure 1 a une constitution générale classique, qui peut par exemple être celle dont on trouvera une description dans le document EP-A-0 033 263. Elle ne sera en conséquence pas décrite en détail.

La grille 10 est constituée par des plaquettes 11, généralement en alliage à base de zirconium dénommé "ZIRCALOY", assemblées à mi-fer et soudées en leurs points de raccordement 12.

Certaines des plaquettes 11 représentées comportent des bossages 13 d'appui de crayons de combustible (non représentés) et chaque plaquette est percée de fenêtres coopérant avec les ressorts destinés à appliqués les crayons sur les bossages 13. Sur la Figure 1 apparaissent uniquement des ressorts doubles 15 qui s'insèrent dans des échancrures 14 ménagées dans les plaquettes et débouchant sur une des tranches de la plaquette.

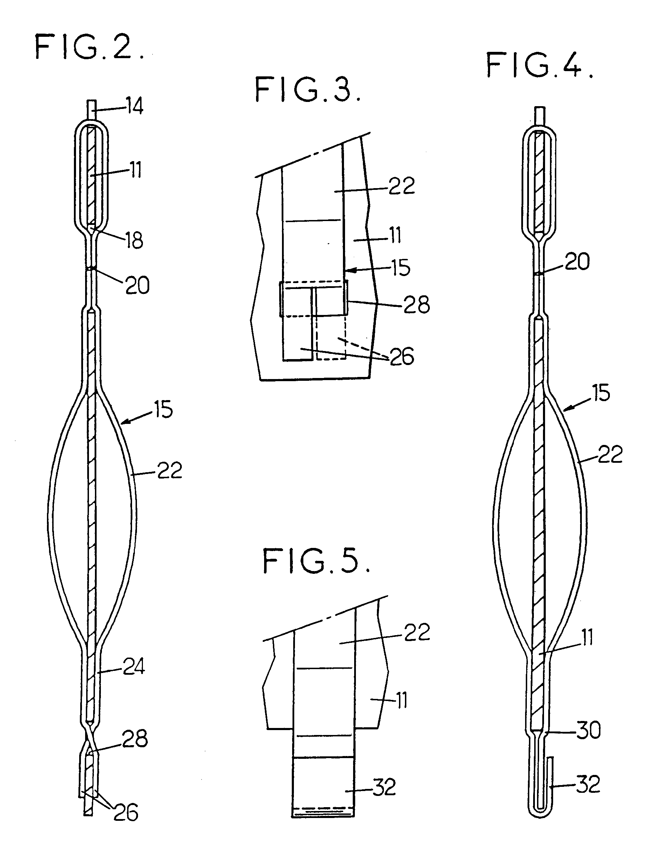

Les ressorts 15 sont constitués par une bande d'alliage ayant des caractéristiques mécaniques supérieures à celles du matériau constitutif des plaquettes. Le ressort 15 montré en Figure 2, du type à épingle en U double, a deux branches reliées par une boucle enfilée dans l'échancrure 14. Les deux branches ont la même forme. Chacune présente une partie plate destinée à s'appliquer contre la partie plate de l'autre branche à travers une fenêtre 18 et à y être fixée par une soudure 20. Au-delà de la partie plate soudée, chaque branche comporte encore une partie qui s'appuie à plat contre la plaquette, une partie cintrée 22 présentant l'élasticité nécessaire pour appuyer le crayon contre un bossage situé en face et une partie terminale 24.

Dans le mode de réalisation montré en Figures 2 et 3, la partie terminale présente une zone destinée à s'appuyer à plat contre la plaquette et une extrémité de largeur réduite à la moitié de la largeur de la partie courante de la branche, de façon à constituer une languette 26. Les languettes présentent deux plis et sont placées de façon à pouvoir se croiser en traversant une fenêtre 28 pratiquée dans la plaquette correspondante.

La mise en place d'un ressort peut s'effectuer de la façon suivante : le ressort mis en forme est inséré transversalement à la plaquette vers le bas sur la figure 2, en faisant glisser ses branches de part et d'autre de la plaquette 11. Pour forcer les extrémités des branches à s'engager dans la fenêtre 28, le ressort est retenu en compression élastique pendant que la boucle est repoussée vers le bas, de façon à bomber les branches et à mettre les languettes en oblique. Une fois l'insertion amorcée, le ressort peut être déplacé sans mise en compression jusqu'à ce que la boucle vienne au contact de l'arête de la plaquette, au fond de l'échancrure 14. Les deux branches sont alors fixées l'une à l'autre par soudage en 20.

Le ressort montré en Figures 4 et 5 (où les éléments correspondant à ceux déjà montrés en Figures 2 et 3 portent le même numéro de référence) se différencie du précédent par la constitution des parties terminales des branches. Les deux branches ont une longueur telle qu'elles débordent de la plaquette 11 vers le bas. Elles présentent un double pli 30 à l'emplacement où les branches débordent de la plaquette. L'une des branches présente une longueur nettement supérieure à l'autre.

Dans un mode de montage, une fois le ressort 15 inséré, l'extrémité. de cette branche est rabattue à 180° pour s'appliquer sur l'extrémité de la branche la plus courte.

Une solution qui semble plus avantageuse consiste à affaiblir le sommet de la boucle, par exemple en y formant deux encoches pour que la partie de largeur réduite constitue une articulation permettant d'écarter les deux branches dans leur plan d'un angle suffisant pour glisser la branche courte entre la plaquette et l'extrémité rabattue de la branche longue. Dans ce cas aucun pliage n'est nécessaire après mise en place du ressort. Dans les deux cas, chaque partie terminale des branches est retenue, dans la portion comprise entre la partie élastique 22 et le double pli 30, contre la plaquette.

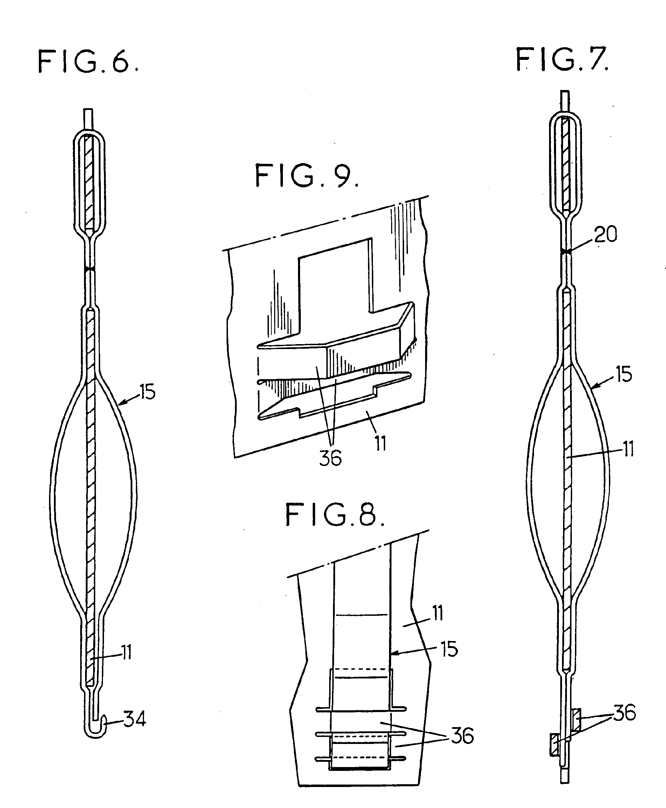

La variante de réalisation montrée en Figure 6 ne se différencie de celle des Figures 4 et 5 que par la longueur des parties des branches en saillie au-dessous de la plaquette 11. Les extrémités sont plus courtes et la partie rabattue à 180° de la branche longue constitue un simple crochet 34 de retenue, constituant un encliquetage.

Enfin, le ressort montré en Figures 7 et 8 se différencie de celui de la Figure 2 en ce que les extrémités des branches sont plates et appliquées l'une contre l'autre. Elles s'engagent entre deux pontets 36 (Figures 7 à 9) constitués par découpe et enfoncement local, en sens inverse, de deux bandes dans la tôle constituant la plaquette. Les pontets présentent avantageusement une forme trapézoïdale (Figure 9) facilitant l'entrée des extrémités des branches, le fond des pontets ayant une largeur sensiblement égale à celle des branches pour assurer un maintien en place précis de ces dernières. L'une des branches peut être plus longue que l'autre pour faciliter l'entrée des extrémités entre les pontets, lorsqu'on glisse les branches le long des faces opposées de la plaquette.

L'invention est susceptible d'autres variantes encore de réalisation et elle peut s'appliquer aux ressorts de constitution dissymétrique, à une seule branche active,(c'est-à-dire constituant ressort), l'autre branche constituant une rotule d'appui.

## Revendications

1. Grille d'entretoisement et de maintien de crayons pour assemblage combustible nucléaire, comprenant plusieurs jeux de plaquettes (11) entrecroisées pour définir des cellules de réception de crayons de combustible et des ressorts rapportés, constitués par une bande repliée en U ayant deux branches actives situées de part et d'autre d'une plaquette (11), destinées à s'appuyer sur les crayons occupant deux cellules mutuellement adjacentes et séparées par la plaquette, raccordées par une boucle surmontant la plaquette et solidarisées l'une de l'autre par soudage (20) à la base de la boucle, à travers une fenêtre (18) ménagée dans la plaquette, **caractérisée en ce que** les branches de chaque ressort sont également reliées entre elles par des moyens de verrouillage purement mécanique des branches l'une par rapport à l'autre et par rapport à la plaquette correspondante, ces moyens étant situés à l'opposé de la soudure par rapport à la partie élastique de la branche correspondante et comprenant les extrémités de chaque branche qui ont une largeur réduite à la moitié de la largeur de la partie courante de la branche et constituent des languettes (26) qui traversent une fenêtre (28) pratiquée dans la plaquette correspondante en s'entrecroisant et s'appuient sur la plaquette au-delà de la fenêtre.

2. Grille d'entretoisement et de maintien de crayons pour assemblage combustible nucléaire, comprenant plusieurs jeux de plaquettes (11) entrecroisées pour définir des cellules de réception de crayons de combustible et des ressorts rapportés, constitués par une bande repliée en U ayant deux branches actives situées de part et d'autre d'une plaquette (11), destinées à s'appuyer sur les crayons occupant deux cellules mutuellement adjacentes et séparées par la plaquette, raccordées par une boucle surmontant la plaquette et solidarisées l'une de l'autre par soudage (20) à la base de la boucle, à travers une fenêtre (18) ménagée dans la plaquette, **caractérisée en ce que** les branches de chaque ressort sont également reliées entre elles par des moyens de verrouillage purement mécanique des branches l'une par rapport à l'autre et par rapport à la plaquette correspondante, ces moyens étant situés à l'opposé de la soudure par rapport à la partie élastique de la branche correspondante et comprenant une partie terminale (32), l'une des branches, qui est plus longue que l'autre, étant rabattue à 180° pour s'appliquer sur l'extrémité de ladite autre branche, en saillie au-delà de la plaquette.

3. Grille selon la revendication 2, caractérisée en ce que la boucle présente un affaiblissement local constituant une articulation permettant de faire tourner les branches l'une par rapport à l'autre dans leur plan.

## Patentansprüche

1. Beabstandungs- und Haltegitter für Brennstäbe in Kernbrennelementkassetten, mit mehreren Gruppen von gekreuzten Platten (11) zur Bildung von Aufnahmezellen für die Brennstoffstäbe und zugehöriger Federn, bestehend aus einem U-förmig gebogenen Band mit zwei aktiven Schenkeln, die zu beiden Seiten einer Platte (11) angeordnet sind und dazu bestimmt sind gegen die Stäbe anzudrücken, die zwei jeweils benachbarte Zellen ausfüllen und durch die Platte voneinander getrennt sind, wobei die Schenkel über eine Schleife miteinander verbunden sind, die die Platte übergreift und die Schenkel an der Basis der Schleife durch ein Fenster (18) welches in der Platte eingearbeitet ist durch Verschweißen (20) miteinander verbunden sind,
dadurch gekennzeichnet,
daß die Schenkel einer jeden Feder ebenfalls untereinander durch aussschließlich mechanische Verriegelungsorgane miteinander verbunden sind und bezüglich der entsprechenden Platte, wobei diese Organe gegenüber den Verschweißungen bezüglich der elastischen Seite des entsprechenden Schenkels gelegen sind und die Enden eines jeden Schenkels aufweisen, die eine auf die Hälfte der üblichen Breite reduzierte Breite der Schenkel aufweisen und Zungen (26) bilden, die ein Fenster (28) durchqueren, welches in der entsprechenden Platte eingearbeitet ist, indem sich die Zungen überkreuzen und auf der Platte oberhalb des Fensters aufliegen.

2. Beabstandungs- und Haltegitter für Brennstäbe von Kernbrennelementkassetten, mit mehreren Gruppen gekreuzter Platten (11) die Aufnahmezellen für die Brennstäbe bilden und mit zugehörigen Federn, die aus einem U-förmigen Band bestehen, und jeweils zwei aktive Schenkel aufweisen, die zu beiden Seiten einer Platte (11) angeordnet sind und dazu bestimmt sind gegen die Brennstäbe anzudrücken, die zwei jeweils benachbarte Zellen ausfüllen und durch die Platte voneinander getrennt und miteinander über eine Schleife verbunden sind, die die Platte übergreift und wobei die Schenkel aneinander durch Verschweißung (20) an der Basis der Schleife durch ein Fenster (18), welches in die Platte eingearbeitet ist, aneinander befestigt sind,
dadurch gekennzeichnet,
daß die Schenkel jeder Feder ebenfalls untereinander über ausschließlich mechanisch wirkende Verriegelungsmittel der Schenkel zueinander und bezüglich der entsprechenden Platte miteinander verbunden sind, wobei diese Organe gegenüber der Verschweißung bezüglich des elastischen Teils des entsprechenden Schenkels angeordnet sind und einen Endbereich (32) aufweisen, wobei einer der Schenkel, welcher länger ist als der andere um 180 ° umgebogen ist, um auf dem Ende des anderen Schenkels anzuliegen, wobei dieser über die Platte übersteht.

3. Gitter nach Anspruch 2, dadurch gekennzeichnet, daß die Schleife eine lokale Abschwächung darstellt, welches ein Gelenk bildet, welches es erlaubt die Schenkel zueinander in ihrer Ebene zu drehen.

## Claims

1. A grid for holding and bracing fuel elements in a nuclear fuel assembly, comprising a plurality of sets of plates (11) mutually intersecting for defining fuel element receiving cells, and springs carried by the plates, formed as a U-bent strip having two active legs situated each on one side of a plate (11), for bearing on fuel elements occupying two mutually adjacent cells separated by the plate, connected together by a loop located over the plate and joined together by a weld (20) at the base of the loop, through a window (18) formed in the plate, characterized in that the legs of each spring are also mutually connected by means mechanically locking the legs with respect to each other and with respect ot the respective plate, said means being located opposite the weld with respect to the resilient part of the respective leg and comprising the end portions of each leg which have a width which is half the width of a current portion of the leg and which constitute tongues (26) which project through a window and cross in the window (28) formed in the respective place and contact the plate beyond the window.

2. A grid for holding and bracing fuel elements in a nuclear fuel assembly, comprising a plurality of sets of plates (11) mutually intersecting for defining fuel element receiving cells, and springs carried by the plates, formed as a U-bent strip having two active legs situated each on one side of a plate (11), for bearing on fuel elements occupying two mutually adjacent cells separated by the plate, connected together by a loop located over the plate and joined together by a weld (20) at the base of the loop, through a window (18) formed in the plate, characterized in that the legs of each spring are also mutually connected by means mechanically locking the legs with respect to each other and with respect of the respective plate, said means being located opposite the weld with respect to the resilient part of the respective leg and comprising an end portion (32), one of the legs, which is longer than the other leg, being bent back by 180° for being in contact with the end of said other leg, which projects beyond the plate.

3. Grid according to claim 3, wherein the loop is locally weakened for constituting an articulated joint authorizing an angular movement of the two legs with respect to each other in their own plane.
